# EUROPEAN PATENT APPLICATION

(11) **EP 4 459 112 A1**
(43) Date of publication of application: **06.11.2024**
(21) Application number: 22915456.2
(22) Date of filing: 05.10.2022
(51) Int. Cl.: F02B 43/00, F02P 13/00, F02M 21/02, F02B 19/12, F02D 19/02

(54) **GAS ENGINE**

(30) Priority: 28.12.2021 JP 2021213720
(71) Applicant: KAWASAKI JUKOGYO KABUSHIKI KAISHA, Kobe-shi, Hyogo 650-8670 (JP)
(72) Inventor: SAKAI, Yoshishige, Hyogo, 650-8670 (JP); AOTA, Akihito, Hyogo, 650-8670 (JP); TANIKAWA, Tatsuro, Hyogo, 650-8670 (JP)
(74) Representative: Dehns
(86) International application number: PCT/JP2022/037237
(87) International publication number: WO 2023/127221

(57) **Abstract**

A gas engine (1) includes: a frame (2) including a crankcase (21) accommodating a crankshaft (22); a cylinder (3) projecting from the frame (2); and a cylinder head (4) attached to the cylinder (3) and including an intake path (41) and an exhaust path (42). The gas engine (1) further includes: a fuel gas valve (51) that controls injection of a fuel gas into intake air, the fuel gas valve (51) being mounted to an intake pipe (13) connected to the cylinder head (4) or mounted to the cylinder head(4); a separation cover (8) defining a separation chamber (80) between the frame (2) and the separation cover (8), the separation chamber (80) accommodating the cylinder (3), the cylinder head (4), and the fuel gas valve (51); and a ventilation fan that sucks air present in the separation chamber (80).

## Description

### Technical Field

The present disclosure relates to a gas engine that runs on a fuel gas.

### Background Art

A gas engine that is a four-cycle reciprocating engine is conventionally known. Such a gas engine includes: a frame including a crankcase accommodating a crankshaft; cylinders projecting from the frame; and cylinder heads attached to the cylinders, respectively. Each of the cylinder heads includes an intake path and an exhaust path.

For example, FIG. 3 of Patent Literature 1 shows a gas engine in which a fuel gas valve is mounted to a cylinder head. The fuel gas valve controls injection of a fuel gas into intake air.

### Citation List

### Patent Literature

PTL 1: Japanese Laid-Open Patent Application Publication No. 2018-62899

### Summary of Invention

### Technical Problem

In the case where a fuel gas valve is exposed to the outside, there is the need to take measures to prevent ignition of a fuel gas leaking from the fuel gas valve. For example, a possible approach is to increase the ventilation quantity for an engine room where a gas engine is located as compared to normal ventilation quantity for a gas engine in which a fuel gas valve is not exposed to outside. However, it is desired to prevent ignition of a leaking fuel gas by a simpler configuration.

It is therefore an object of the present disclosure to provide a gas engine that can prevent ignition of a leaking fuel gas by a simple configuration.

### Solution to Problem

The present disclosure provides a gas engine including: a frame including a crankcase accommodating a crankshaft; a cylinder projecting from the frame; a cylinder head attached to the cylinder and including an intake path and an exhaust path; a fuel gas valve that controls injection of a fuel gas into intake air, the fuel gas valve being mounted to an intake pipe connected to the cylinder head or mounted to the cylinder head; a separation cover defining a separation chamber between the frame and the separation cover, the separation chamber accommodating the cylinder, the cylinder head, and the fuel gas valve; and a ventilation fan that sucks air present in the separation chamber.

### Advantageous Effects of Invention

The present disclosure provides a gas engine that can prevent ignition of a leaking fuel gas by a simple configuration.

### Brief Description of Drawings

FIG. 1 is a cross-sectional side view of a gas engine according to one embodiment.
FIG. 2 is a cross-sectional plan view taken along the line II-II of FIG. 1.

### Description of Embodiments

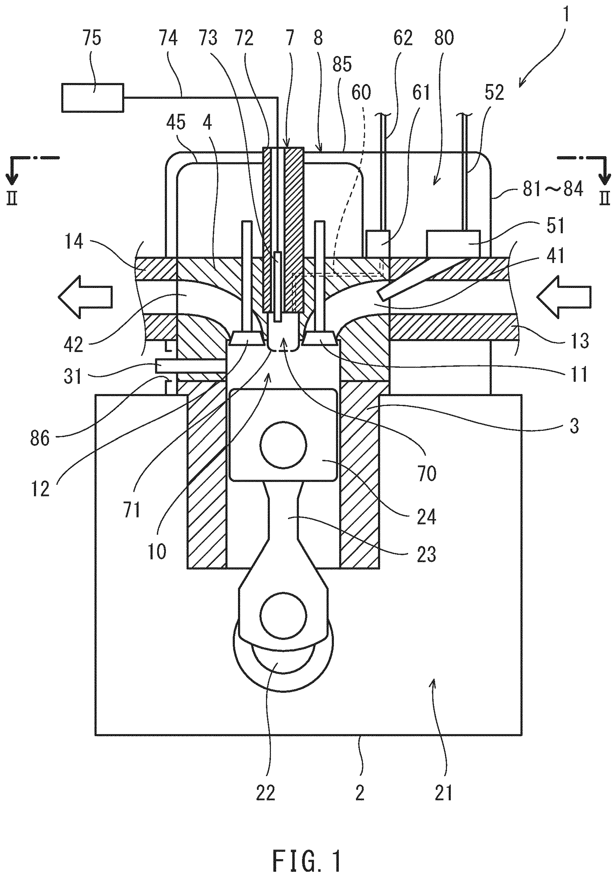

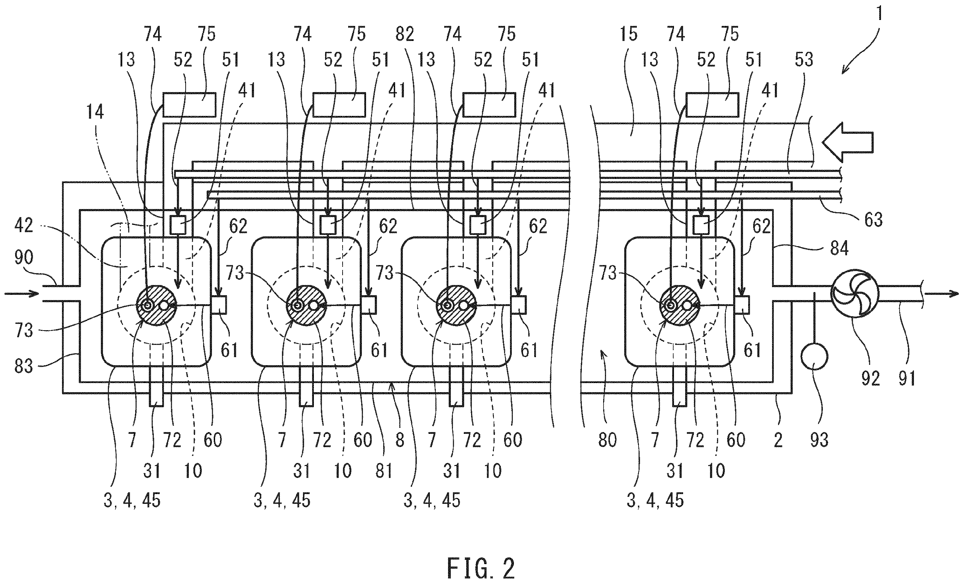

FIGS. 1 and 2 show a gas engine 1 according to one embodiment. The gas engine 1 runs on a fuel gas such as city gas, natural gas, biogas, or hydrogen gas.

Specifically, the gas engine 1 includes: a frame 2 including a crankcase 21 accommodating a crankshaft 22; and cylinders 3 projecting from the frame 2. In the present embodiment, the cylinders 3 are arranged in a row in the axial direction of the crankshaft 22. Alternatively, the cylinders 3 may be arranged in two rows forming a V-shape as viewed in the axial direction of the crankshaft 22.

Cylinder heads 4 are attached to the cylinders 3, respectively. A piston 24 is located in each of the cylinders 3. The piston 24 is coupled to the crankshaft 22 by a rod 23. A combustion chamber 10 is defined between the piston 24 and the cylinder head 4.

Each of the cylinder heads 4 includes an intake path 41 and an exhaust path 42. In FIG. 1, the intake path 41 and the exhaust path 42 are depicted as extending in opposite directions from the combustion chamber 10 for the sake of schematically illustrating the construction of the gas engine 1. However, in fact, the intake path 41 and the exhaust path 42 extend in the same direction from the combustion chamber 10, as shown in FIG. 2.

That is, in the present embodiment, an intake manifold 15 and an exhaust manifold, which will be described later, are located on the same side with respect to the row of cylinders. Alternatively, the intake manifold 15 and the exhaust manifold may be located on opposite sides with respect to the row of cylinders, and the intake path 41 and the exhaust path 42 may extend in opposite directions from the combustion chamber 10.

An intake valve 11 and an exhaust valve 12 are mounted to each of the cylinder heads 4. The intake valve 11 opens and closes the opening of the intake path 41 that leads to the combustion chamber 10, and the exhaust valve 12 opens and closes the opening of the exhaust path 42 that leads to the combustion chamber 10.

An intake pipe 13 and an exhaust pipe 14 are connected to each of the cylinder heads 4. The gas engine 1 includes the intake manifold 15 extending in the direction in which the cylinders 3 are arranged. Each of the intake pipes 13 brings the intake manifold 15 into communication with a corresponding one of the intake paths 41. Similarly, each of the exhaust pipes 14 brings the exhaust manifold, which extends in the direction in which the cylinders 3 are arranged, into communication with a corresponding one of the exhaust paths 42.

A cylinder head cover 45 is attached to each of the cylinder heads 4. Devices such as drive machinery that drives the intake valve 11 and the exhaust valve 12 are located across the cylinder head 4 from the cylinder 3, and the cylinder head cover 45 covers the devices.

The gas engine 1 further includes a main fuel gas valve 51, an ignition system 7, and an auxiliary fuel gas valve 61 for each cylinder 3. In addition, the gas engine 1 includes a first fuel gas supply pipe 53 and a second fuel gas supply pipe 63 that extend in the direction in which the cylinders 3 are arranged. Each of the main fuel gas valves 51 is connected to the first fuel gas supply pipe 53 by a first branching pipe 52, and each of the auxiliary fuel gas valves 61 is connected to the second fuel gas supply pipe 63 by a second branching pipe 62.

In the present embodiment, the main fuel gas valve 51 is mounted to the intake pipe 13. In the present embodiment, a fuel injection nozzle of the main fuel gas valve 51 extends into the intake path 41 of the cylinder head 4, and the main fuel gas valve 51 injects the fuel gas into intake air present in the intake path 41. The main fuel gas valve 51 is electrically controlled to control the injection of the fuel gas into intake air.

Alternatively, the tip of the fuel injection nozzle of the main fuel gas valve 51 may be located in the intake pipe 13, and the main fuel gas valve 51 may inject the fuel gas into intake air present in the intake pipe 13. The main fuel gas valve 51 may be mounted to the cylinder head 4. In this case, the main fuel gas valve 51 may inject the fuel gas directly into intake air present in the combustion chamber 10.

The ignition system 7 ignites, in the combustion chamber 10, an air-fuel mixture of the fuel gas injected from the main fuel gas valve 51 and intake air. In the present embodiment, the ignition system 7 includes a pre-chamber 70 and an ignition plug 73. The pre-chamber 70 communicates with the combustion chamber 10 through an ejection hole.

In the present embodiment, combustion of the air-fuel mixture in the combustion chamber 10 takes place under lean-burn conditions. The ignition system 7 ignites, in the pre-chamber 70, an air-fuel mixture of the fuel gas (injected into the pre-chamber 70 via the auxiliary fuel gas valve 61) and air by the ignition plug 73 to produce a flame that is ejected from the ejection hole and to ignite the lean air-fuel mixture present in the combustion chamber 10.

The ignition system 7 extends from the cylinder head 4 and penetrates through the cylinder head cover 45 and a separation cover 8 described later. Specifically, the ignition system 7 includes: a rod-shaped pre-chamber holder 72 extending from the inside of the cylinder head 4 to the outside of the separation cover 8 along an extension of the centerline of the cylinder 3; and a surrounding portion 71 that, together with an end surface of the pre-chamber holder 72, surrounds the pre-chamber 70. Apart of the surrounding portion 71 protrudes into the combustion chamber 10, and the protruding part includes the ejection hole.

The pre-chamber holder 72 includes a through hole extending in the axial direction of the pre-chamber holder 72. The ignition plug 73 is located in the through hole, and a part of ignition plug 73 projects into the pre-chamber 70.

The auxiliary fuel gas valve 61 is mounted to the cylinder head 4. The auxiliary fuel gas valve 61 may, as shown in FIG. 1, be attached to the upper surface of the cylinder head 4 or may, as shown in FIG. 2, be attached to a side surface of the cylinder head 4.

The auxiliary fuel gas valve 61 is connected to the pre-chamber 70 via a fuel supply path 60 defined in the cylinder head 4 and the pre-chamber holder 72. The auxiliary fuel gas valve 61 is electrically controlled to control the injection of the fuel gas into the pre-chamber 70. The auxiliary fuel gas valve 61 may inject the fuel gas directly into the pre-chamber 70.

Further, in the present embodiment, the separation cover 8 is used to define a separation chamber 80 between the frame 2 and the separation cover 8. The separation chamber 80 accommodates all the cylinders 3, all the cylinder head covers 45, all the main fuel gas valves 51, and all the auxiliary fuel gas valves 61.

The separation chamber 80 is a chamber for holding the fuel gas leaking from any of the main fuel gas valves 51 or the auxiliary fuel gas valves 61. Thus, the main fuel gas valves 51 and the auxiliary fuel gas valves 61 are explosion-proof valves.

The separation chamber 80 includes: first and second side walls 81 and 82 facing each other across the cylinders 3 in a direction perpendicular to the direction in which the cylinders 3 are arranged; third and fourth side walls 83 and 84 facing each other across the cylinders 3 in the direction in which the cylinders 3 are arranged; and a ceiling wall 85 covering from above a space surrounded by the first to fourth side walls 81 to 84.

The first to fourth side walls 81 to 84 rise from the frame 2 along the cylinders 3. The intake and exhaust pipes 13 and 14 described above penetrate through the second side wall 82 located in proximity to the intake manifold 15.

In the present embodiment, a pressure sensor 31 that detects a pressure in the combustion chamber 10 is mounted to each of the cylinder heads 4. In the illustrated example, the pressure sensor 31 extends outward from the combustion chamber 10 in the radial direction of the cylinder 3 and projects from a side surface of the cylinder head 4. The direction in which the pressure sensor 31 extends may be changed as appropriate. The pressure sensor 31 does not necessarily need to be mounted to each of the cylinder heads 4, and may be mounted to and project from each of the cylinders 3.

On the first side wall 81 there is a tubular portion 86 into which the pressure sensor 31 is inserted. The tubular portion 86 extends from the first side wall 81 to the vicinity of the cylinder head 4. The tubular portion 86 defines, in the first side wall 81, a hole through which the pressure sensor 31 is exposed outside the first side wall 81. Thus, a non-explosion-proof pressure sensor can be used as the pressure sensor 31. The length of the tubular portion 86 is not limited to a particular length and may be smaller or greater than the inner diameter of the tubular portion 86. Depending on the orientation of the pressure sensor 31, the tubular portion 86 may be on the ceiling wall 85 and define, in the ceiling wall 85, a hole through which the pressure sensor 31 is exposed outside the ceiling wall 85.

An ignition coil 75 is located outside the separation chamber 80. The ignition plug 73 of the ignition system 7 is connected to the ignition coil 75 by a cable 74. Thus, a non-explosion-proof ignition coil can be used as the ignition coil 75.

A first ventilation pipe 90 and a second ventilation pipe 91 are connected to the separation chamber 80. In the present embodiment, the first ventilation pipe 90 and the second ventilation pipe 91 are located on opposite sides with respect to the cylinders 3 in the direction in which the cylinders 3 are arranged. That is, the first ventilation pipe 90 is connected to the third side wall 83, and the second ventilation pipe 91 is connected to the fourth side wall 84. Air is taken into the separation chamber 80 through the first ventilation pipe 90, and air present in the separation chamber 80 is discharged through the second ventilation pipe 91 to a given place (e.g., the outside of the engine room where the gas engine 1 is located).

A ventilation fan 92 that sucks air present in the separation chamber 80 is mounted to the second ventilation pipe 91. In addition, a detector 93 that detects whether the concentration of the fuel gas in the second ventilation pipe 91 is higher than a threshold is mounted to the second ventilation pipe 91. In the illustrated example, the detector 93 is located upstream of the ventilation fan 92. The detector 93 may be located downstream of the ventilation fan 92. Alternatively, for example, the detector 93 may be mounted to the separation cover 8 and detect whether the concentration of the fuel gas in the separation chamber 80 is higher than a threshold.

The detector 93 may be a single sensor that emits a signal in case that the concentration of the fuel gas exceeds the threshold or may be constructed of a concentration sensor that detects the concentration of the fuel gas and a determiner that determines whether the concentration detected by the concentration sensor is higher than the threshold.

In the gas engine 1 configured as described above, even in case that the fuel gas leaks from any of the main fuel gas valves 51 or the auxiliary fuel gas valves 61, the fuel gas is held in the separation chamber 80 and discharged from the separation chamber 80 by the ventilation fan 92. Thus, ignition of the leaking fuel gas can be prevented by a simple configuration. Additionally, non-explosion-proof electronics can be used as electronics located outside the separation chamber 80.

Additionally, in the present embodiment, the use of the detector 93 makes it possible to monitor whether the fuel gas leaks.

### (Modifications)

The present disclosure is not limited to the embodiment described above, and various modifications can be made without departing from the gist of the present disclosure.

For example, the ignition system 7 does not necessarily need to include the pre-chamber 70 and the ignition plug 73 and may be an ignition system that injects a pilot oil into the combustion chamber 10 and allows the pilot oil to self-ignite. In this case, the auxiliary fuel gas valves 61 are not needed.

However, when the gas engine 1 includes the ignition system 7 of the pre-chamber type as in the above embodiment, accommodation of the auxiliary fuel gas valves 61 together with the main fuel gas valves 51 in the separation chamber 80 makes it possible to address not only leakage of the fuel gas from the main fuel gas valves 51 but also leakage of the fuel gas from the auxiliary fuel gas valves 61.

### (Summary)

The present disclosure provides a gas engine including: a frame including a crankcase accommodating a crankshaft; a cylinder projecting from the frame; a cylinder head attached to the cylinder and including an intake path and an exhaust path; a fuel gas valve that controls injection of a fuel gas into intake air, the fuel gas valve being mounted to an intake pipe connected to the cylinder head or mounted to the cylinder head; a separation cover defining a separation chamber between the frame and the separation cover, the separation chamber accommodating the cylinder, the cylinder head, and the fuel gas valve; and a ventilation fan that sucks air present in the separation chamber.

In the above configuration, even in case that the fuel gas leaks from the fuel gas valve, the fuel gas is held in the separation chamber and discharged from the separation chamber by the ventilation fan. Thus, ignition of the leaking fuel gas can be prevented by a simple configuration. Additionally, non-explosion-proof electronics can be used as electronics located outside the separation chamber.

The gas engine may further include: a ventilation pipe that is connected to the separation chamber and to which the ventilation fan is mounted; and a detector that detects whether a concentration of the fuel gas in the separation chamber or the ventilation pipe is higher than a threshold. In this configuration, whether the fuel gas leaks can be monitored.

The gas engine may further include a pressure sensor that detects a pressure in a combustion chamber defined between a piston located in the cylinder and the cylinder head, the pressure sensor projecting from the cylinder head or the cylinder, and the separation cover may include a tubular portion defining a hole through which the pressure sensor is exposed outside the separation cover. In this configuration, a non-explosion-proof pressure sensor can be used as the pressure sensor.

The gas engine may further include: a cylinder head cover accommodated in the separation chamber and covering devices located across the cylinder head from the cylinder; and an ignition system that includes an ignition plug and ignites an air-fuel mixture of the fuel gas and the intake air in a combustion chamber defined between a piston located in the cylinder and the cylinder head, the ignition system extending from the cylinder head and penetrating through the cylinder head cover and the separation cover. In this configuration, since an ignition coil connected to the ignition system is located outside the separation chamber, a non-explosion-proof ignition coil can be used as the ignition coil.

The ignition system may include a pre-chamber communicating with the combustion chamber via an ejection hole and ignite, in the pre-chamber, an air-fuel mixture of the fuel gas and air by the ignition plug to produce a flame that is ejected from the ejection hole and to ignite the air-fuel mixture present in the combustion chamber, the fuel gas valve may be a main fuel gas valve, the gas engine may further include an auxiliary fuel gas valve that controls injection of the fuel gas into the pre-chamber, the auxiliary fuel gas valve being mounted to the cylinder head, and the separation chamber may accommodate the auxiliary fuel gas valve. In this configuration, where the gas engine includes the ignition system of the pre-chamber type, leakage of the fuel gas from the auxiliary fuel gas valve can also be addressed.

## Claims

1. A gas engine comprising:
a frame including a crankcase accommodating a crankshaft;
a cylinder projecting from the frame;
a cylinder head attached to the cylinder and including an intake path and an exhaust path;
a fuel gas valve that controls injection of a fuel gas into intake air, the fuel gas valve being mounted to an intake pipe connected to the cylinder head or mounted to the cylinder head;
a separation cover defining a separation chamber between the frame and the separation cover, the separation chamber accommodating the cylinder, the cylinder head, and the fuel gas valve; and
a ventilation fan that sucks air present in the separation chamber.

2. The gas engine according to claim 1, further comprising:
a ventilation pipe that is connected to the separation chamber and to which the ventilation fan is mounted; and
a detector that detects whether a concentration of the fuel gas in the separation chamber or the ventilation pipe is higher than a threshold.

3. The gas engine according to claim 1 or 2, further comprising a pressure sensor that detects a pressure in a combustion chamber defined between a piston located in the cylinder and the cylinder head, the pressure sensor projecting from the cylinder head or the cylinder, wherein
the separation cover includes a tubular portion defining a hole through which the pressure sensor is exposed outside the separation cover.

4. The gas engine according to any one of claims 1 to 3, further comprising:
a cylinder head cover accommodated in the separation chamber and covering devices located across the cylinder head from the cylinder; and
an ignition system that includes an ignition plug and ignites an air-fuel mixture of the fuel gas and the intake air in a combustion chamber defined between a piston located in the cylinder and the cylinder head, the ignition system extending from the cylinder head and penetrating through the cylinder head cover and the separation cover.

5. The gas engine according to claim 4, wherein
the ignition system includes a pre-chamber communicating with the combustion chamber via an ejection hole and ignites, in the pre-chamber, an air-fuel mixture of the fuel gas and air by the ignition plug to produce a flame that is ejected from the ejection hole and to ignite the air-fuel mixture present in the combustion chamber,
the fuel gas valve is a main fuel gas valve,
the gas engine further comprises an auxiliary fuel gas valve that controls injection of the fuel gas into the pre-chamber, the auxiliary fuel gas valve being mounted to the cylinder head, and
the separation chamber accommodates the auxiliary fuel gas valve.
